# EUROPEAN PATENT SPECIFICATION

(11) **EP 2 108 349 B1**
(45) Date of publication and mention of the grant of the patent: **25.01.2012**
(21) Application number: 09157703.1
(22) Date of filing: 09.04.2009
(51) Int. Cl.: A61G 3/08, B60P 7/08

(54) **Centrally operated mechanical roll-up strap system for use in means of transport**
Zentral betriebenes, mechanisches Rollgurtsystem zur Verwendung in Transportmitteln
Système de sangle enroulante commandée mécaniquement de manière centralisée pour une utilisation dans des moyens de transport

(30) Priority: 10.04.2008 NL 2001463
(43) Date of publication of application: 14.10.2009
(73) Proprietor: Tribus B.V., 3554 PT De Meern (NL)
(72) Inventor: Van Vliet, Eric, 3086 TN, Rotterdam (NL)
(74) Representative: Klavers, Cornelis

(56) References cited:
- WO-A1-99/22959
- DE-U1-202006 014 771
- US-A- 5 145 299
- US-A1- 2003 190 208
- US-A1- 2006 110 230
- US-B1- 6 524 039

## Description

The present invention relates to a floor and system outlined in the preamble of claim 1.

Known roll-up strap systems comprise one or more operable consoles provided in the dashboard or the roof of a vehicle, to which electrical operating and signalling means are connected. Electric lines extend from the consoles through the wall and the floor of the vehicle to front roll-up strap units provided at various locations in the floor. After a release button or switch is pressed on one of the consoles, an electric signal is delivered to the roll-up strap units via said lines to release the roll-up straps. The roll-up strap can then freely move into and out of the units for securing the loads. Once the loads have been secured, the driver will operate a console again by pressing a locking button on the console. As a result, an electric signal is delivered from the console in question to the roll-up strap units via the electric lines, whereupon said units block the roll-up strap, so that the roll-up straps can no longer move and the loads are secured.

A drawback of the known system is the fact that such consoles require the concealed installation on and in the wall and the ceiling of electric lines which transmit the control and driving signals from the console. Extending the number of consoles for the purpose of simplifying operation leads to an even higher cost price of the vehicle. In addition, this leads to additional safety costs to be incurred in order to prevent (a) console(s) from being undesirably operated by a passenger, which might result in the load or, for example, the wheelchairs in the vehicle no longer being secured. Furthermore, the known system has electromechanical converters to be built into the central operating element and in each of the roll-up strap units, which converters are needed for converting the aforesaid electric signals supplied via the electric lines into corresponding control movements.

US-2006/0110230 acknowledged in the preamble of claim 1 in particular discloses such an electro-mechanic operating element mounted to the wall of a vehicle. By means of cable lines the element is connected to roll-up strap units received by an anchor point of tracks provided in the floor of the vehicle.

The object of the present invention is to provide a simplified yet safe system which is easy to install and which requires fewer adaptations in the vehicle.

In order to accomplish that object, the system according to the invention is defined by the subject-matter of claim 1.

The advantage of the floor and system according to the invention is that no use is made of a console provided in and on the wall or the ceiling, from where relatively vulnerable lines extend to each of the roll-up strap units, in particular via the wall. The central operating element is provided with a lever which is mechanically operated, preferably manually when used in means of transport such as a vehicle, which lever transfers mechanical release signals to the (likewise mechanically operated) roll-up strap units, without electromechanical conversions being needed as in the prior art. Not only does this simplify the system and reduce the cost price thereof, but in addition it leads to a reliable, completely mechanical construction of the system according to the invention, making the system less prone to malfunction.

In one embodiment of the invention, which is installed in means of transport, the mechanical signal transmitters are usual Bowden cables, which are more preferably to be safely concealed only in or under the floor of the means of transport.

The invention further relates to a floor or interconnectable floor members of an aircraft, a ship, a truck, a tractor, a trailer or other means of transport provided with the system according to the invention. As will be explained in more detail hereinafter, the system is excellently suitable for being integrated in cavities or slots which are generally already present in the prefabricated floor.

In particular the system according to the present invention will now be explained in more detail with reference to the figures below, in which like parts are indicated by the same numerals. In the drawing:
Figure 1 shows a possible embodiment of the system according to the invention;
Figure 2 shows an exploded view of a central operating element according to the invention from the system shown in figure 1;
Figure 3 shows the assembled central operating element of figure 2;
Figure 4 shows a roll-up strap unit from the system shown in figure 1; and
Figure 5 shows a floor made up of floor members, which comprises several built-in systems shown in figure 1.

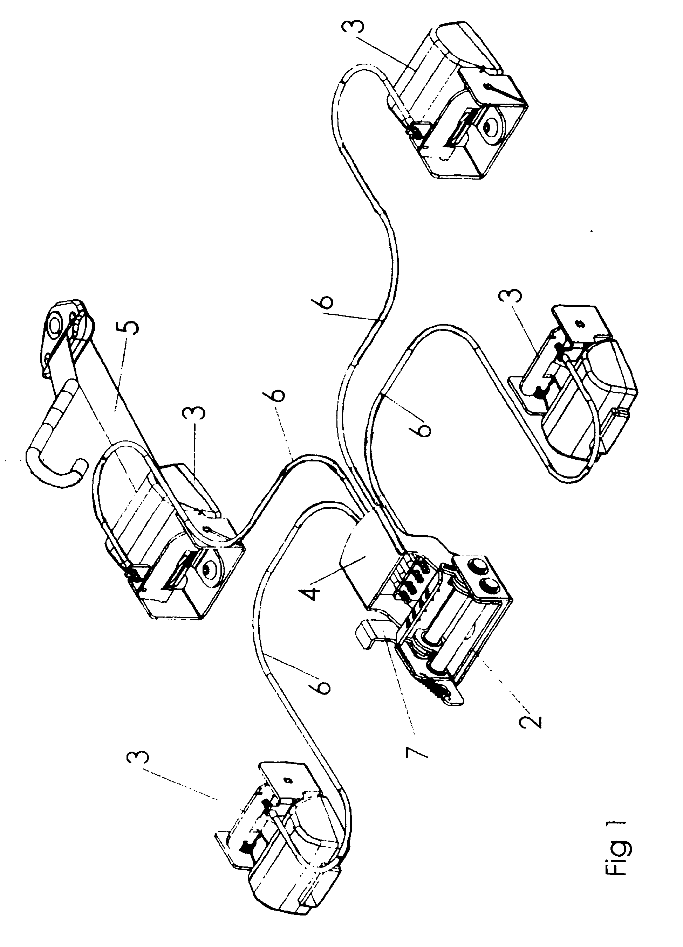

Figure 1 shows a system 1 by means of which one or more roll-up strap units 3 connected thereto can be locked and unlocked by operating a central operating element 2. After central unlocking by moving a lever 4 in the operating element 2 to one position or pulling said lever, roll-up straps 5 in the units 3 are released, after which said straps can be extended. The system 1 is to that end provided with mechanical signal transmitters 6 arranged between the operating element 2 and the various roll-up strap units 3. The roll-up straps 5 or safety belts, which are freely movable after being centrally unlocked or released, can then be passed or hooked over a load (not shown in the figures) or, for example, a wheelchair or an invalid chair. The central operating element 2 is furthermore provided with a locking mechanism 7, which is arranged for maintaining release signals generated by the lever 4 and supplied to the units 3 via the signal transmitters 6 until locking signals are supplied to the roll-up strap units 3 via the transmitters 6 as a result of the locking mechanism 7 being operated. The roll-up straps 5 can no longer be extended in that case and the load is secured against unexpected movements.

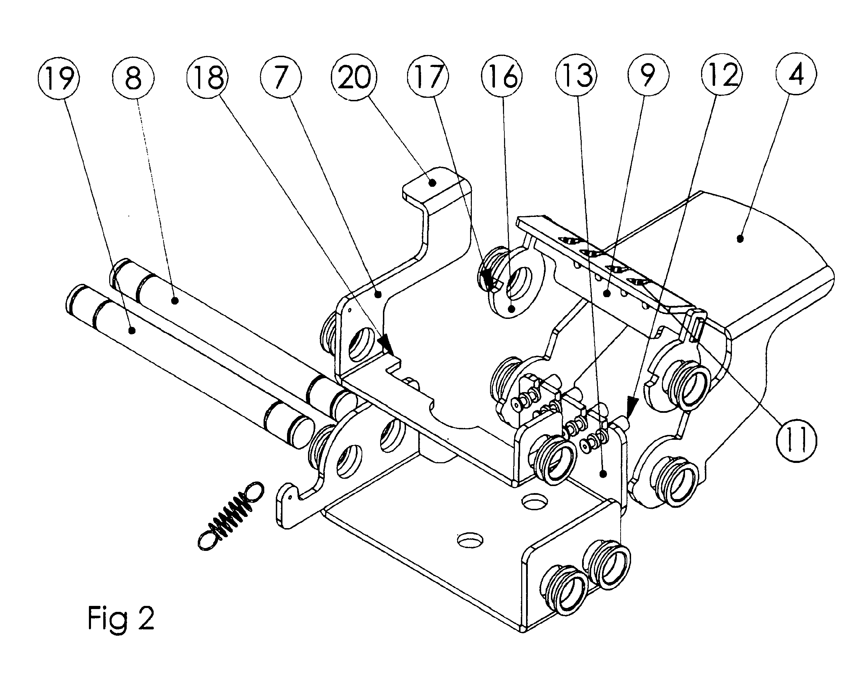

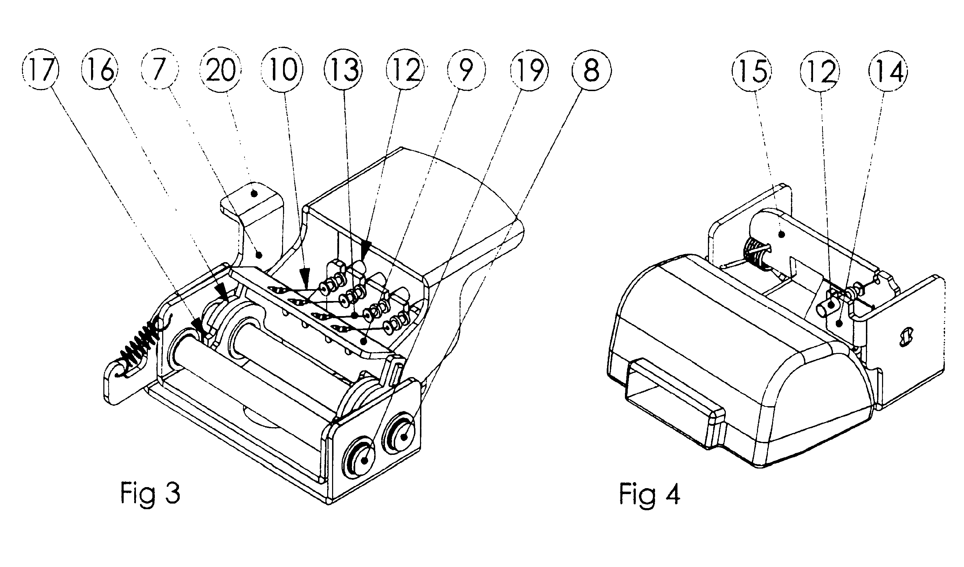

Figures 2, 3 and 4 are detail views of the central operating element 2 and the roll-up strap units 3, respectively. The operating element 2 shown in figures 2 and 3 comprises a lever 4, which is configured as a lever 4 which pivots about a pivot pin 8. Pivoting of the lever 4 about the pivot pin 8 also results in pivoting of a drawing plate 9 about the pin 8. In a possible embodiment of the mechanical signal transmitters, in which said signal transmitters comprise common Bowden cables 6, the various cores or wires 10 being movable within the cable are hooked into respective openings 11 in the plate 9. The outer part 12 of the cable 6 is hooked into openings in a fixedly disposed holding plate 13. When the lever 4 is pulled, the inner wire 10 is moved with respect to the outer part 12 of the Bowden cables 6, which are thus connected in parallel.

The other ends of said cables 6 are connected to the roll-up strap holders or units 3 shown in figure 4, which are in part of a common design. The outer part 12 is hooked into an opening of a fixedly disposed plate 14 thereof, and the end of the inner wire 10 is hooked into an opening of a spring-loaded, pivotally movable element 15. The element 15 is connected to a further mechanical locking and unlocking mechanism for roll-up strap holders, which is known per se and will not be explained in more detail herein, therefore.

The drawing plate 9 of the central operating element 2, which pivots about the pin 8, has an annular (in this case) part 16, which is provided with a notch 17. The spring-loaded locking mechanism 7 is provided with a projection 18, which falls into the notch 17 during the time the release signals are maintained. The locking mechanism 7 is to that end provided with a spring-loaded pressure element 20 (figure 3) which pivots about a pin 19. Upon upward movement of the lever 4 (seen in the figures) and corresponding pivoting movement of the drawing plate 9, the projection 18 of the spring-loaded mechanism 7 falls into the notch 17 and thus prevents the drawing plate 9 and the inner wires 10 of the Bowden cables 6 retained therein from moving back when the lever 4 pivots back. When the pressure element 20 is pressed down after the load has been secured, the projection 18 is pushed out of the notch 17 and the drawing plate 9 and the inner wires 10 of the cables 6 will move back under the influence of the spring-loaded elements 15 in the units 3. This causes the roll-up straps 5 to be locked. The release signals for the roll-up strap units 3 are thus maintained until the locking signals are supplied to the roll-up strap units 3 via the signal transmitters 6 as a result of the locking mechanism 7 being operated.

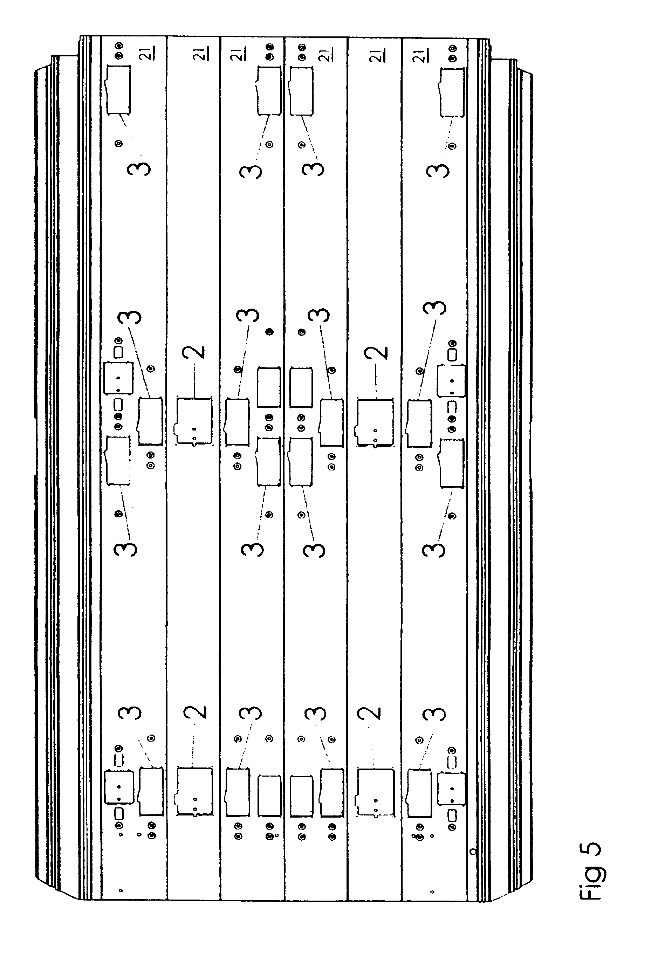

Figure 5 shows a floor 22 built up of possibly interconnectable floor members 21 or be made in one piece, which floor comprises several built-in systems 1. If the system 1 is used in the floor 22 of a means of transport, such as an aircraft, a ship, a truck, a tractor, a trailer or other means of transport or transport vehicle, it is advantageous if the end of the lever 4 and the pressure element 20 extend level with the floor 22 in the non-operative condition, as is also shown in figures 1-4. Loads can be moved across the floor 22 without impediment in that situation, and no obstacles on which the driver may stumble project from the floor 22. Furthermore, wheelchairs can be driven across the level floor without impediment. Various operating elements 2 and the roll-up strap units 3 associated with each of said operating elements are mounted in cavities formed in the floor (members). The cables 6 can extend under the floor 21, 22 or in ducts present therein without adaptations to the interior of a possibly already existing vehicle being required. If the operating element 2 is flush-mounted in the floor 21, 22, the flat upper sides of the lever 4 and the locking mechanism 7, which can be moved up by hand or pressed down by foot, are level with the upper surface of said floor.

By way of alternative, the mechanical signal transmitters 6 may comprise rotary means instead of the Bowden cables 6 that have been explicitly explained in the foregoing or, more generally worded, translation means. It is furthermore possible to use movable rods, or movable guided wires instead of Bowden cables. Generally, the mechanical signal transmitters 6 are configured as signal transmitters, which transmit binary mechanical signals, because they only need to transmit either information about the roll-up straps 5 being locked in the units 3 or information about said straps being released.

## Claims

1. A floor (21) or floor members of a means of transport, such as an aircraft, a ship, a truck, a trailer or other means of transport, and a system (1) comprising a central operating element (2) and one or more roll-up strap units (3) connected thereto, whereby the system comprises mechanical signal transmitters (6) provided between the operating element (2) and the roll-up strap units (3), and whereby the central operating element (2) is provided with a locking mechanism (7) and a lever (4) connected to said locking mechanism (7) and said signal transmitters (6), which lever is configured as a lever (4) which pivots about a pivot pin (8) and which supplies mechanical release signals to the roll-up strap units (3) via the signal transmitters (6) in one position, said locking mechanism (7) being arranged to maintain the release signals until locking signals are supplied to the roll-up strap units (3) via the signal transmitters (6) as a result of the locking mechanism (7) being operated, and that the locking mechanism is provided with a spring-loaded pressure element (20) that operates the locking mechanism (7) **characterised in that** the pivot pin (8) is provided with a notch (17), whilst the locking mechanism (7) which pivots about a pin (19) is provided with a projection (18) which falls into said notch (17) during the time the release signals are maintained, and that the operating element (2) is flush mounted in the floor (21) such that flat upper sides of the lever (4) and the locking mechanism (7) are level with the upper surface of said floor (21).

2. Floor (21) and system (1) according to claim 1, **characterised in that** the lever (4) and the locking mechanism (7) have flat upper sides, which can be moved up by hand or pressed down by foot.

3. Floor (21) and system (1) according to claim 1 or 2, **characterised in that** operating elements (2) and the roll-up strap units (3) are mounted in cavities formed in the floor (21).

4. Floor (21) and system (1) according to any one of claims 1-3, **characterised in that** the mechanical signal transmitters (6) comprise rotation or translation means, which for example comprise movable rods or cables (6), such as Bowden cables.

5. Floor (21) and system (1) according to claim 4, **characterised in that** if cables are applied in the mechanical signal transmitters these cables (6) can extend under the floor (21) or in ducts present therein.

6. Floor (21) and system (1) according to any one of claims 1-5, **characterised in that** the floor has interconnectable floor members (21).

7. A means of transport, such as a transport vehicle or delivery van, provided with a floor or interconnectable floor members and system (1) according to any one of the claims 1-6.

## Patentansprüche

1. Boden (21) oder Bodenelemente eines Transportmittels, wie beispielsweise eines Flugzeugs, eines Schiffs, eines Lastkraftwagens, eines Anhängers oder eines anderen Transportmittels, und System (1), das ein zentrales Bedienelement (2) und eine oder mehrere mit demselben verbundene Aufrollgurt-Einheiten (3) umfasst, wobei das System mechanische Signalgeber (6) umfasst, die zwischen dem zentralen Bedienelement (2) und den Aufrollgurt-Einheiten (3) bereitgestellt werden, und wobei das zentrale Bedienelement (2) mit einem Arretierungsmechanismus (7) und einem mit dem Arretierungsmechanismus (7) und den Signalgebern (6) verbundenen Hebel (4) versehen ist, wobei der Hebel als ein Hebel (4) konfiguriert ist, der um einen Gelenkzapfen (8) schwenkt und der in einer Stellung mechanische Freigabesignale über die Signalgeber (6) an die Aufrollgurt-Einheiten (3) liefert, wobei der Arretierungsmechanismus (7) dafür angeordnet ist, die Freigabesignale aufrechtzuerhalten, bis Arretierungssignale über die Signalgeber (6) an die Aufrollgurt-Einheiten (3) geliefert werden im Ergebnis vom Betätigung des Arretierungsmechanismus (7), und der Arretierungsmechanismus mit einem federgespannten Druckelement (20) versehen ist, das den Arretierungsmechanismus (7) betätigt, **dadurch gekennzeichnet, dass** der Gelenkzapfen (8) mit einer Kerbe (17) versehen ist, während der Arretierungsmechanismus (7), der um einen Zapfen (19) schwenkt, mit einem Vorsprung (18) versehen ist, der während der Zeit, in der die Freigabesignale aufrechterhalten werden, in die Kerbe (17) fällt, und **dadurch**, dass das Bedienelement (2) bündig in dem Boden (21) angebracht ist derart, dass flache Oberseiten des Hebels (4) und des Arretierungsmechanismus (7) auf gleicher Höhe mit der oberen Fläche des Bodens (21) sind.

2. Boden (21) und System (1) nach Anspruch 1, **dadurch gekennzeichnet, dass** der Hebel (4) und der Arretierungsmechanismus (7) flache Oberseiten haben, die mit der Hand nach oben bewegt oder mit dem Fuß nach unten gedrückt werden können.

3. Boden (21) und System (1) nach Anspruch 1 oder 2, **dadurch gekennzeichnet, dass** das Bedienelement (2) und die Aufrollgurt-Einheiten (3) in Hohlräumen angebracht sind, die in dem Boden (21) geformt sind.

4. Boden (21) und System (1) nach einem der Ansprüche 1 bis 3, **dadurch gekennzeichnet, dass** die mechanischen Signalgeber (6) Rotations- oder Translationsmittel umfassen, die zum Beispiel bewegliche Stangen oder Kabel (6), wie beispielsweise Bowdenzüge, umfassen.

5. Boden (21) und System (1) nach Anspruch 4, **dadurch gekennzeichnet, dass**, falls bei den mechanischen Signalgebern Kabel angewendet werden, sich diese Kabel (6) unter dem Boden (21) oder in darin vorhandenen Kanälen erstrecken können.

6. Boden (21) und System (1) nach einem der Ansprüche 1 bis 5, **dadurch gekennzeichnet, dass** der Boden miteinander zu verbindende Bodenelemente (21) hat.

7. Transportmittel, wie beispielsweise ein Transportfahrzeug oder Lieferwagen, versehen mit einem Boden oder miteinander zu verbindenden Bodenelementen und System (1) nach einem der Ansprüche 1 bis 6.

## Revendications

1. Plancher (21) ou éléments de plancher d'un moyen de transport, comme un avion, un bateau, un camion, une caravane ou un autre moyen de transport, et un système (1) comprenant un élément d'actionnement centralisé (2) et une ou plusieurs unités de sangles enroulantes (3) raccordées à celui-ci, moyennant quoi le système comprend des émetteurs de signaux mécaniques (6) prévus entre l'élément d'actionnement (2) et les unités de sangles enroulantes (3), et moyennant quoi l'élément d'actionnement centralisé (2) est pourvu d'un mécanisme de verrouillage (7) et d'un levier (4) raccordé audit mécanisme de verrouillage (7) et auxdits émetteurs de signaux (6), lequel levier est configuré comme un levier (4) qui pivote autour d'un axe de pivot (8) et qui fournit des signaux de déblocage mécanique aux unités de sangles enroulantes (3) via les émetteurs de signaux (6) dans une position, ledit mécanisme de verrouillage (7) étant agencé pour conserver les signaux de déblocage jusqu'à ce que des signaux de verrouillage soient fournis aux unités de sangles enroulantes (3) via les émetteurs de signaux (6) en conséquence de l'actionnement du mécanisme de verrouillage (7), et que le mécanisme de verrouillage est pourvu d'un élément de pression chargé par ressort (20) qui actionne le mécanisme de verrouillage (7), **caractérisé en ce que** l'axe de pivot (8) est pourvu d'une encoche (17), alors que le mécanisme de verrouillage (7) qui pivote autour d'un axe (19) est pourvu d'une protubérance (18) qui tombe dans ladite encoche (17) pendant la durée pendant laquelle les signaux de déblocage sont conservés, et que l'élément d'actionnement (2) est monté au ras dans le plancher (21) de sorte que les côtés supérieurs plats du levier (4) et le mécanisme de verrouillage (7) soient au niveau de la surface supérieure dudit plancher (21).

2. Plancher (21) et système (1) selon la revendication 1, **caractérisé en ce que** le levier (4) et le mécanisme de verrouillage (7) ont des côtés supérieurs plats, qui peuvent être déplacés vers le haut à la main ou pressés vers le bas au pied.

3. Plancher (21) et système (1) selon la revendication 1 ou 2, **caractérisé en ce que** les éléments d'actionnement (2) et les unités de sangles enroulantes (3) sont montés dans des cavités formées dans le plancher (21).

4. Plancher (21) et système (1) selon une quelconque des revendications 1 à 3, **caractérisé en ce que** les émetteurs de signaux mécaniques (6) comprennent des moyens de rotation ou translation, qui par exemple comprennent des fils ou câbles (6) déplaçables, comme des câbles Bowden.

5. Plancher (21) et système (1) selon la revendication 4, **caractérisé en ce que** si des câbles sont appliqués dans les émetteurs de signaux mécaniques ces câbles (6) peuvent s'étendre sous le plancher (21) ou dans des conduits présents dans celui-ci.

6. Plancher (21) et système (1) selon une quelconque des revendications 1 à 5, **caractérisé en ce que** le plancher comporte des éléments de plancher (21) interconnectables.

7. Moyen de transport, comme un véhicule de transport ou van de livraison, pourvu d'un plancher ou d'éléments de plancher interconnectables et système (1) selon une quelconque des revendications 1 à 6.
